# EUROPÄISCHE PATENTSCHRIFT

(11) **EP 1 601 958 B1**
(45) Veröffentlichungstag und Bekanntmachung des Hinweises auf die Patenterteilung: **18.01.2012**
(21) Anmeldenummer: 04717016.2
(22) Anmeldetag: 04.03.2004
(51) Int. Cl.: G01N 27/64

(54) **VERFAHREN UND MESSSYSTEM ZUR ERFASSUNG VON GEFAHRSTOFFEN**
METHOD AND TEST SYSTEM FOR DETECTING HARMFUL SUBSTANCES
PROCEDE ET SYSTEME DE MESURE DESTINES A LA DETECTION DE SUBSTANCES DANGEREUSES

(30) Priorität: 07.03.2003 DE 10310394
(43) Veröffentlichungstag der Anmeldung: 07.12.2005
(73) Patentinhaber: Airsense Analytics GmbH, 19061 Schwerin (DE)
(72) Erfinder: WALTE, Andreas, 19059 Schwerin (DE); MÜNCHMEYER, Wolf, 38468 Ehra-Lessien (DE)
(74) Vertreter: Schneider, Henry
(86) Internationale Anmeldenummer: PCT/DE2004/000427
(87) Internationale Veröffentlichungsnummer: WO 2004/079359

(56) Entgegenhaltungen:
- EP-A- 0 401 861
- US-A- 4 311 669
- US-A- 4 551 624
- SPARKMAN R B O D: "The 12th Sanibel Conference on mass spectrometry: field-portable and miniature mass spectrometry" JOURNAL OF THE AMERICAN SOCIETY FOR MASS SPECTROMETRY, ELSEVIER SCIENCE INC., NEW YORK, NY, US, Bd. 11, Nr. 5, Mai 2000 (2000-05), Seiten 468-471, XP004196498 ISSN: 1044-0305
- HALEY L V ET AL: "Development of an explosives detection system using fast GC-IMS technology" , SECURITY TECHNOLOGY, 1998. PROCEEDINGS., 32ND ANNUAL 1998 INTERNATIONAL CARNAHAN CONFERENCE ON ALEXANDRIA, VA, USA 12-14 OCT. 1998, NEW YORK, NY, USA,IEEE, US, PAGE(S) 59-64 XP010309603 ISBN: 0-7803-4535-5 Spalte 62-63; Abbildungen 8,9 Seite 59, linke Spalte
- UTRIAINEN M ET AL: "Combining miniaturized ion mobility spectrometer and metal oxide gas sensor for the fast detection of toxic chemical vapors" SENSORS AND ACTUATORS B, ELSEVIER SEQUOIA S.A., LAUSANNE, CH, Bd. 93, Nr. 1-3, 9. Juli 2002 (2002-07-09), Seiten 17-24, XP004437073 ISSN: 0925-4005

## Beschreibung

Die Erfindung betrifft ein Verfahren nach dem Oberbegriff des Anspruches 1 und ein entsprechendes Messsystem nach dem Oberbegriff des Anspruches 7.

Solche Verfahren und Messsysteme werden zur Identifizierung von Schadstoffen in der Umgebungsluft eingesetzt. Der Nachweis von Schadstoffen nach Unfällen oder Katastrophen ist z.B. für Einsatzkräfte der Feuerwehren oder Polizei wichtig. Zum Schutz der Einsatzkräfte ist deshalb in Deutschland eine Liste von 33 der gängigsten Schadstoffe erstellt worden. Diese Liste weist auch Konzentrationen auf, die sogenannten Einsatz-Toleranz-Werte (ETW-Liste), bei denen davon ausgegangen werden kann, dass ein sicheres Arbeiten über einen Zeitraum von 4h ohne Atemschutz möglich ist. Zur Zeit wird an einer Erweiterung der Liste unter Berücksichtigung der internationalen Acute Exposure Guideline Levels (AEGL) gearbeitet, Für das Militär und seit kurzem auch für die zivilen Einsatzkräfte ist insbesondere der zusätzliche Nachweis von chemischen Kampfstoffen oder Sprengstoffen von Interesse.

Diese Gefahrenstoffe können teilweise mit Messsystemen, welche hauptsächlich aus einzelnen Gasdetektoren oder Kombinationen aus verschiedenen Gasdetektoren bestehen, erfasst werden. Die Messsignale der einzelnen Gasdetektoren können dann mit vorher gemessenen, bzw. auch gespeicherten Signalen verglichen und der gemessene Zustand beschrieben werden. Als Detektoren kommen z. B., Photo-Ionisierungs-Detektoren (PID), Elektrochemische Zellen (EZ) und Metall-Oxid-Sensoren (MOS) in Frage. Messgeräte, die zwei-dimensionale Informationen, also Spektren liefern, werden auch eingesetzt. Beispiele hierfür sind Massenspektrometer (MS), Fourier Transform Infrarot Spektrometer (FITR) oder Ionen-Mobilitäts-Spektrometer (IMS).

Einfache Detektoren, wie z.B. PID, MOS oder EZ sind mit, ihren Nachweisgrenzen im oberen ppb-, bzw. unteren ppm-Bereich zum Nachweis von vielen Schadstoffen geeignet, aber zum Nachweis von Kampfstoffen zu unempfindlich. Außerdem reicht ihre Selektivität häufig nicht aus, um die Schadstoffe mit der notwendigen Sicherheit nachzuweisen.

Aus der US 2959677 sind die wesentlichen Funktionsmerkmale eines PID bekannt Mittels einer UV-Lampe wird das nachzuweisende Gas ionisiert und anschließend elektrisch nachgewiesen. Ausschlaggebend ist in erster Linie das Ionisierungspotential der nachzuweisenden Verbindung. Falls die Energie der UV-Strahlung höher als die Ionisierungsenergie der Verbindung ist, lassen sich diese detektieren. Nachteilig ist, dass viele Schadstoffe nicht erfasst werden können. Es wird keine spektrale Information geliefert. Weiterhin ist nachteilig, dass PID-Lampen schnell kontaminieren, was zu schlechteren Signalausbeuten führt.

Aus der US3631436 sind die wesentlichen Funktiohsmerkmale der Metall Oxid Sensoren bekannt. Diese Sensoren reagieren mit reduzierenden und oxidierenden Gasen. Sie haben eine relativ starke Querempfindlicheit und können nicht zur Einzelstofferkennung oder als Warnmelder wegen der großen Fehlalarmrate eingesetzt werden. MOS Sensoren zeichnen sich durch sehr schnelle Ansprechzeiten nach einer Gasexposition aus, haben aber den Nachteil dass die Abfallzeiten wesentlich länger ausfallen.

Elektrochemische Zellen sind selektiver als MOS Sensoren. Eine Bestimmung von Einzelstoffen ist mit den Detektoren trotzdem nicht möglich, da auch hier Querempfindlichkeiten auftreten, bzw. keine elektrochemischen Zellen für alle Substanzen zur Verfügung stehen. Aus der US3925183 sind die wesentlichen Funktionsmerkmale der elektrochemischen Zellen bekannt.

Das Ionen-Mobilitäts-Spektrometer (IMS) oder der Plasma-Chromatograph ist seit längeren bekannt. Im Gegensatz zu anderen Spektrometern werden keine beweglichen oder-aufwendigen Einzelteile im IMS benötigt, so dass diese Systeme klein und kostengünstig aufzubauen sind. Für viele Verbindungen können sehr geringe Nachweisgrenzen im ppt-ppb-Bereich erreicht werden. Deshalb werden diese Systeme seit Jahren beim Militär zum Nachweis von Kampfstoffen eingesetzt.
Eine Beschreibung der einzelnen Komponenten in einem IMS findet sich z.B. in der US 3621240. Die unterschiedliche Beweglichkeit von Ionen wird beim IMS ausgenutzt. Diese Geräte bestehen aus einem Einlass-System, einer Ionenquelle, wobei typischerweise radioaktive Ni63 Folien eingesetzt werden, einer elektrischen Driftröhre, wo die Ionen nach einem definierten Start mittels eines elektrisch geschalteten Gitters nach ihrer Beweglichkeit bei Umgebungsdruck getrennt werden, und einem Messfühler zum Nachweis der geringen elektrischen Strömt, die durch die auftreffenden Ionen erzeugt werden. In der Ionenquelle werden bei Atmosphärendruck hauptsächlich Luftmoleküle ionisiert, die anschließend Wassercluster ionisieren, welche auch Reaktant-Ionen genannt werden. Über Protonentransfer-, Elektronentransfer- oder Protonenabstraktions-Reaktionen werden anschließend die Schadstoffe ionisiert. Durch Änderung der Polarität der Driftstrecke können dann im positiven Betriebsmodus positive, bzw. im negativen Betriebsmodus negative Ionen nachgewiesen werden.

Bei mobilen Systemen besteht der Einlass in der Regel aus einer Membran. In der US 4311669 wird ein Membraneinlasssystem für IMS beschrieben. Vorteilhaft ist, - dass durch die. Membran die Einflüsse des Messsignals durch Störgrößen wie z.B. Feuchte, Druck und Temperatur reduziert werden und dass dadurch IMS Systeme klein und tragbar herzustellen sind. Nachteilig ist, dass die Membran die Messsysteme in ihrer Antwortzeit etwas träger reagieren lässt.

Besonders nachteilig bei den IMS ist die lange Zeit, die abzuwarten ist, bis nach dem Einschalten des Gerätes das System wieder messbereit ist Der IM-Detektor benötigt diese Zeit, da er Störsubstanzen, die sich während des ausgeschalteten Zustandes angereichert haben, aus dem System spülen muss. Nachteilig ist weiterhin, dass bei kurzfristiger Überdosierung die Systeme nicht mehr messbereit sind und mehrere Minuten, bis hin zu Stunden gespült werden müssen. Stören ist weiterhin, dass die Spektren konzentrationsabhängig sind.

Ein weiteres Problem ist die teilweise geringe Selektivität des IMS. Ein Grund dafür ist, dass durch konkurrierende Reaktionen im Ionisierungsraum häufig nicht die interessierenden Schadstoffe ionisiert werden and-somit nicht nachzuweisen sind. Diese konkurtierenden Reaktionen können dazu führen, dass z.B. bei Anwesenheit von Gasen wie z.B. Ammoniak vicle Schadstoffe mit geringerer Protonenaffinität, wie z.B. viele Lösungsmittel, gar nicht mehr im Spektrum erscheinen.
Im Gegenzug kann dann aber durch Anwesenheit von Lösungsmitteln in höheren Konzentrationen (ppm) der Nachweis von Kampfstoffen erschwert, wenn nicht sogar unmöglich werden. Durch die überlagerten Spektren in einem Gemisch aus Gasen wird dann die Feblalarmrate gesteigert.
Weiterhin werden Schadstoffe: mit geringer Protonenaffinität oder Elektronenaffinität nicht mit den geforderten Nachweisgrenzen ermittelt.

Ein weiterer Nachteil des IMS ist der begrenzte Messbereich, der z.B. bei einem betastrahler als Ionisierungsquelle typischerweise maximal zwei Größenordungen beträgt Eine quantitative Aussage wird dadurch schwierig.

Problematisch ist weiterhin, dass viele Schadstoffe einen geringen Dampfdruck aufweisen, so dass die Nachweisgrenzen der Detektoren nicht ausreichen, um diese zu registricren.

Eine Veröffentlichung von L.V. Haley [Development of an Explosives Detection System using Fast GC-IMS Technology; Proc. 32 Annual 1998 Int. Canada Conf., Alexandria, VA, USA (1998) S. 59 - 64] beschreibt die Kombination eines Gaschromatgraten mit einem Ionen Mobilitäts Spektrometer (IMS).
In EP 0 401861 wird ein Erkennungssystem für explosive Gase vorgestellt. wobei in einer Prüfkammer eine Dampfn und/oder eine Partikelemission geführt wird, in der eine

Trennung des Dampfgemisches und/oder Partikelemission stattfindet die dann einem Gaschromatgrafen und einem Ionen Mobilitäts Spektrometer (IMS) zur detaillierten Stoffanalyse zugeführt werden.

Weiterhin ist aus einer Veröffentlichung von O.D. Sparkman [The 12th Sanibel Conference on Mass Spectrometry: Field-Portable and Miniature Mass Spectrometry; J.Am.Soc.Mass.Spectrom. 11 (2000) S. 468-471] ein Verfahren bekannt bei dem zur Bestimmung von gasförmigen Schadstoffen eine Kombination aus einem IMS und weiteren Detektoren verwendet wird. Dabei werden mit den weiteren Detektoren, die wegen ihrer geringen Protonenaffinitäten bzw. geringen Elektronegativitäten nicht mit dem IMS nachweisbaren Schadstoffe nachgewiesen.

Es besteht also die Aufgabe, ein Verfahren und eine Einrichtung zu entwickeln, womit die oben genannten Schadstoffe detektiert werden können. Hierzu sind die Nachteile des IMS aufzuheben bzw. zu minimieren.

Die Aüfgabe wird verfahrensseitig durch die kennzeichnenden Merkmale des Anspruchs 1 und einrichtungsseitig durch die kennzeichnenden Merkmale des Anspruchs 6 gelöst.

Zweckdienliche Ausgestaltungen ergeben sich aus den Unteransprüchen 7 bis 10.

Mit der Erfindung werden die genannten Nachteile des Standes der Technik beseitigt.

Einige der Nachteile des IMS können durch geeignete Kombinationen aus IMS und anderen Detektoren behoben werden. Die zusätzlichen Detektoren sollen die Schadstoffe erfassen, die durch das IMS nicht gemessen werden. Ein PID kann dann z.B. die Aromaten wie Benzol nachweisen. Weitere Verbindungen wie z.B. Phosgen können mit elektrochemischen Zellen mit niedrigeren Nachweisgrenzen nachgewiesen werden. Die Querempfindlichkeit der MOS Sensoren kann ausgenutzt werden, um andere Schadstoffe, wie z.B. Kohlenmonoxid, nachzuweisen.

Eine weitere Abhilfe zur Verbesserung der Selektivität des IMS kann durch eine Zudosierung von Reaktionsgasen realisiert werden. Nach der US4551624 verbessert sich die Selektivität des Systems im-positiven-Betriebsmodus gegenüber phosphororganischen Verbindungen, wie z.B. Kampfstoffen, durch die Zudosierung, von Aceton. Die Selektivität des Systems im negativen Betriebsmodus verbessert sich gegenüber stickstofforganischen Verbindungen, wie z.B. bei Sprengstoffen, wenn Tetrachlorkohlenstoff verwendet wird.

Wie oben erwähnt, führt die Zudosierung dieser Reaktionsgase aber dazu, dass viele der anderen Schadstoffe überhaupt nicht mehr erfasst werden.

Deshalb wird zum allgemeinen Nachweis von Schadstoffen ein Betrieb ohne zudotiertes Reaktionsgas vorgeschlagen. Zur Absicherung eines Befundes wird im zweiten Schritt ein Reaktionsgas zudosiert. So kann z.B. im positiven Betriebsmodus Aceton oder Ammoniak verwendet werden, um einen besseren und sicheren Nachweis von Kampfstoffen zu ermöglichen. Im negativen Betriebsmodus kann Dichlormethan oder Tetrachlorkohlenstoff verwendet werden, um explosive Verbindungen nachzuweisen.

Eine geregelte Zudosierung eines Referenzgases, wie z.B. gereinigte Frischluft am Einlass kann verhindern, dass eine Überdosierung des IMS stattfindet. Als- Regelgrö-βe für die Verdünnung kann das IMS oder vorzugsweise ein schnellerer Detektor, wie z.B. ein MOS Sensor dienen. Zusätzlich lässt sich der Messbereich des IMS hiernit um ein bis zwei Größenordnungen verbessern.

Um die Messbereitschaft des Messsystems nach dem Einschalten zu verbessern, kann das System auch im ausgeschalteten Zustand ständig, mit Frischluft gespült werden. Ein Reinigungsgas wie z.B. Ozon aus einer Ozonquelle kann zusätzlich verwendet werden, um Kontaminationen im Messsystem abzubauen, so dass das System schneller einsatzbereit ist.

Die. Erfindung soll, beispielhaft anhand einer schematischen Darstellung näher erläutert werden. Die Einrichtung zur Durchführung, des Verfahrens zur Bestimmung gasförmiger Schadstoffe besteht in der Hauptsache aus einem Messsystem 1, welches beispielsweise aus einer Kombination von einem IMS 2, einem PID 3, einer EZ-4 und zwei MOS 5,6 besteht. Das zu messende Gas wird über eine Förderpumpe 9 angesaugt und gelangt über eine Aufspaltung des Messgaspfades zum IMS und zu den anderen Detektoren. Der Pfad zu den anderen Detektoren ist wiederum in zwei Pfade unterteilt, wobei ein Pfad zur EZ 4 führt, der andere über die MOS 5,6 zum PID 3. Die Gaspfade werden anschließend zusammengeführt, bevor sie mit der Förderpumpe 9 verbunden werden. Das Messsystem verfügt über eine weitere Förderpumpe 7 zur Zumischung von einem Referenzgas in den Messgaspfad 8, welcher von der oben aufgeführten Förderpumpe 9 gesaugt wird. Um die Detektoren zu schonen, wird das Messsystem so betrieben, dass hauptsäclich das Referenzgas gemessen wird. Bei geringen Messsignalen wird die Fördermenge der Förderpumpe 7-reduziert, so dass der Anteil der zu messenden Umgebungsluft zunimmt. Die Zudosierung des Referenzgases kann über definierte Stufen erfolgen oder aber auch durch das Messsignal eines Detektors geregelt werden.

Bei Anwesenheit von komplexen IMS Spektren oder insbesondere bei begründeten Verdachtsfällen kann die Selektivität des IMS gesteigert werden, indem über eine Dosiereinheit 10, Reaktionsgase in das IMS geführt werden. Bei der Auswertung der Messsignale känn durch Kombination der Spektren mit und ohne Reaktionsgase die Selektivität des Systems verbessert werden

Elektronische Rechner 11 bereiten die Daten der einzelnen Detektoren auf und stellen diese-graphisch über eine Anzeigeeinheit 12 oder akustisch dar. Beispielsweise können beim IMS nur die integrierten Messsignale vor und nach dem Reaktant-Ionenpeak verwendet werden. Da das System sowohl im negativen als auch im positiven Betriebsmodus arbeiten kann, ergeben sich somit vier Messkanäle. Zusammen mit den Signalen der anderen Detektoren stehen in der oben geschilderten Konfiguration acht Messkanäle zur Verfügung. Selbstverständlich lassen die Spektren des IMS auch feiner unterteilen, so dass wesentlich mehr als vier Kanäle zur Auswertung herangezogen werden können.

Die Kanäle können als Eingangssignale für eine folgende Mustererkennung verwendet werden. Einfache Disümzklassifikatoren, wie z.B. der Abstandsklassifikator nach Euklid, bis hin zu Diskriminanzklassitikatoren oder auch neuronale Netze können hier eingesetzt werden.

Eine Garstellung der IMS Spektren, bei der das Messsignal des IMS-Detektors als Funktion der Zeit dargestellt wird, ist auch möglich und zur Identifizierung von einzelnen Verbindungen, wie z.B. Kampfstoffen notwendig.

Zur Untersuchung von kontaminierten Oberflächen dient eine optionale Wärmequelle 13, die z.B. über Infrarot-Strahlen die Oberflächen erwärmen kann, so dass die Verbindungen verflüchtigt werden können. Zusätzlich ist es möglich das Messsystem mit einem Ortungsverfahren, z.B. GPS, und einem Speicher zu versehen. Somit können die Messsignale der Detektoren örtlich und zeitlich zugeordnet werden.

Falls das Messsystem nicht verwendet wird, wird es in einer speziellen Aufbereitungsstation 14, welche über eine Förderpumpe 15 verfügt, gelagert. Die Förderpumpe sorgt dafür, das das System ständig mit dem Referenzgas gespült wird. Dadurch wird verhindert, dass sich störende Komponenten im Messsystem anlagern. Das Messsystem ist dann innerhalb von wenigen Minuten einsatzbereit. Die Aufbereitungsstation dient gleichzeitig zur Aufladung der Akkumulatoren und kann auch die im System gespeicherten Daten auslesen und bei Bedarf weiterleiten.

### Aufstellung der Bezugszeichen

- 1: Messsystem
- 2: IMS, Ionen Mobilitäts Spektrometer
- 3: PID, Photo Ionisations Detektor
- 4: EZ, Elektrochemische Zelle
- 5: MOS, Metall Oxid Sensor
- 6: MOS, Metall Oxid sensor
- 7: Förderpumpe
- 8: Messgapfad
- 9: Förderpumpe
- 10: Einheit zur Dosierung von Reaktionsgasen
- 11: Elektronische Rechner
- 12: Anzeigeeinheit
- 13: Wärmequelle
- 14: Aufbereitestation
- 15: Förderpumpe
- 16: Elektrische Leitungen

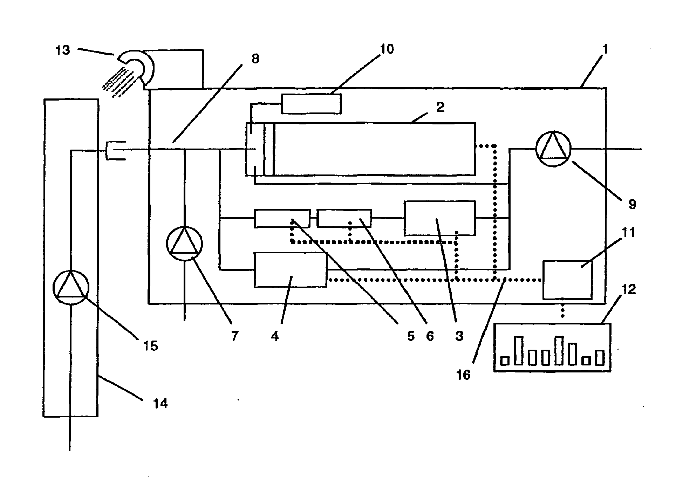

## Patentansprüche

1. Verfahren zur Bestimmung von gasförmigen Schadstoffen, bei dem in einem Messsystem (1) ein Probengasstrom angesaugt wird, mit einer Kombination aus einem Ionen-Mobilitäts-Spektrometer (2) und weiteren Detektoren, die die Schadstoffe nachweisen, welche nicht mit dem Ionen-Mobilitäts-Spektrometer (2) nachgewiesen werden,
**dadurch gekennzeichnet, dass** der Probengasstrom vor dem Erreichen der Detektoren, alternativ auch nur vor dem Erreichen des Ionen-Mobilitäts-Spektiometers (2), mit einem Referenzgas, welche über eine Förderpumpe (7) zudosiert wird, vermischt wird und damit die Konzentration der Schadstoffe, die zu den Detektoren geführt wird, immer unter einer vordefinierten Konzentration gehalten wird, bei Anwesenheit von komplexen Ionen-Mobilitäts-Spektrometer-Spektren während der Messung dem Ionen-Mobilitäts-Spektiometer (2) ein Reaktionsgas über eine Einheit zur Dosierung von Reaktionsgasen (10) zugeführt wird, um dadurch die Selektivität des Iönen-Mobilitäts-Spektrometers (2) zu erhöhen, und dass aus den erhaltenen Messsignalen, über das Verhältnis des Gasflusses in einem Messgaspfad (8) vor der Dosierung und dem Gasfluss des Referenzgases, die ursprüngliche Konzentration der Schadstoffe in einem Messgas zurückgerechnet wird, und dann mit vorher definierten und gespeicherter Messwerten über einen einfachen Vergleich der Signalhöhen oder einer Mustererkennung, Wo alle Detektorsignale mit vorher gespeicherten Signalen auf einmal verglichen werden, ein Alarm ausgelöst werden kann und das Messsystem (1) nach der Messphase durch Zuführung des Referenzgases gespült und bei Vorhandensein von Kontaminationen durch Zuführung eines zusätzlichen Reinigungsgases gereinigt wird.

2. Verfahren nach Anspruch 1,
**dadurch gekennzeichnet, dass** die Vermischung der gasförmigen Schadstoffe vor dem Erreichen der Detektoren, alternativ auch nur vor dem Erreichen des Ionen-Mobilitäts-Spektrometers (2), mit dem Referenzgas so erfolg, indem, das Referenzgas in definierten Mengen zugeführt wird, wobei mit der höchst möglichen Flüssmenge angefangen wird und später reduziert wird, der Gasfluss anschließend aufgespaltet wird und zum Ionen-Mobilitäts-Spektrometer (2) und parallel zu den anderen Detektoren geleitet wird.

3. Verfahren nach Anspruch 1,
**dadurch gekennzeichnet, dass** das Messsignal eines oder mehrerer der Detektoren zur Regelung der Dosierung des Referenzgases verwendet wird, indem z. B. die relative Signalhöhe eines schnellen Sensors, z. B. eines Metall-Oxid Sensors (5), direkt genutzt wird, um den Gasfluss der Förderpumpe (7) kurzfristig zu erhöhen, falls das Messsignal des Detektors zunehmen sollte, bzw. verringern falls das Messsignal des Detektors abnehmen sollte, weiterhin kann zusätzlich das Messsignal eines trägeren Sensors, z. B. das des Ionen-Mobilitäts-Spektrometers (2) genutzt werden, um die absoluten Bereiche der Gasflussmenge des Referenzgases einzustellen, indem die absoluten Signalhöhen während eines längeren Zeitraumes verwendet werden, um die grobe Einstellung, d. h. eine Einstellung des maximalen und minimalen Bereichs der Fördermenge des Referenzgases des Gasflusses zu ermöglichen.

4. Verfahren nach Anspruch 1,
**dadurch gekennzeichnet, dass** die gasförmigen Schadstoffe über eine Kombination aus dem Ionen-Mobilitäts-Spektrometer (2) und einem Photo-Ionisations-Detektor (3) zum Nachweis von Aromaten, und über eine zusätzliche elektrochemische Zelle (4) zum Nachweis einzelner Substanzen, wie z. B. Phosgen, und über zusätzliche Metall-Oxid-Sensoren (5, 6) zum Nachweis von z. B. Kohlenwasserstöffen und Kohlenmonoxid geleitet werden, wobei der Probengasstrom aufgespaltet wird und zum Ionen-Mobilitäts-Spektrometer (2) und parallel zu den anderen Detektoren geleitet wird.

5. Verfahren nach Anspruch 1,
**dadurch gekennzeichnet, dass** direkt nach einer Erfassung von gasförmigen Schadstoffen industrieller Quellen, ein Messbetrieb zur selektiveren Erfassung von Schadstoffen mit hoher Protonen- oder Elektronenaffinität, wie z. B. chemischen Dampfstoffen oder Sprengstoffen, gestartet wird, indem nach einem normalen Messbetrieb ein oder verschiedene Reaktionsgase dem Ionen-Mobilitäts-Spektrometer (2) über die Einheit zur Dosierung von Reaktionsgasen (10) definiert zudosiert werden, und diese Reaktionsgase sich dadurch auszeichnen, dass sie etwas geringere Protonen- bzw. Elektronenaffinitäten aufweisen, als die zu erfassenden Schadstoffe, und dadurch den Nachweis mit höherer Spezifität ermöglichen, da viele störende Verbindungen dann nicht ionisiert werden und anschließend eine Kombination der Messsignale des Ionen-Mobilitäts-Spektrometers (2) ohne und mit Reaktionsgas zusammen zur Bewertung herangezogen werden.

6. Einrichtung zur Bestimmung von gasförmigen Schadstoffen, betstehend aus einem mobilen Messsystem (1) mit einem Ionen-Mobilitäts-Spektrometer (2) und weiteren Detektoren, wobei die weiteren Detektoren beispielsweise ein Photo-Ionisations-Detektor (3), eine elektrochemische Zelle (4) und zwei Metall-Oxid-Sensoren (5, 6) sind, welche über Gasleitungen mit einer ersten Förderpumpe (9) verbunden sind, **dadurch gekennzeichnet, dass** vor den Detektoren eine Anordnung zur kontrollierten Dosierung eines Referenzgases mittels einer zweiten Förderpumpe (7) und zusätzlich vor dem Ionen-Mobilitäts-Spektrometer (2) eine Einheit zur Dosierung von Reaktionsgasen (10) eingerichtet sind, und eine Elektronik mit elektronischen Rechnern (11), eine Anzeigeeinheit (12) und optionale optische und akustische Warnsignalgeber und eine Aufbereitestation (14), welche über eine dritte Förderpumpe (15) zum Spülen und Reinigen des Messsystems (1) verfügt, vorhanden sind.

7. Einrichtung nach Anspruch 6,
**dadurch gekennzeichnet, dass** ein Messgas in drei Messgaspfade aufgeteilt ist, wobei einer zum Ionen-Mobilitäts-Spektrometer (2) führt, ein anderer zu einer elektrochemischen Zelle (4) und der letzte zu einer Anordnung aus zwei Metall-Oxid-Sensoren (5, 6) und einem nachfolgende Phato-Ionisations-Detektor (3) führt.

8. Einrichtung nach Anspruch 7,
**dadurch gekennzeichnet, dass** die Dosiereinheit (10) am Ionen-Mobilitäts-Spektrometer (2) positioniert ist, welche über ein Ventil bei Bedarf ein oder mehrere Reaktionsgase zudosieren kann, welche in Gasflaschen, Diffusionsröhrchen oder Permeationsbehälter gelagert sind.

9. Einrichtung nach Anspruch 6,
**dadurch gekennzeichnet, dass** das Messsystem (I) mit der Aufbereitestation (14), welche über die dritte Förderpumpe (15) zum Spülen, und Reinigen des Messsystems (1) und über eine Quelle zur Erzeugung eines Reinigungsgases verfügt, bzw. auf eine Quelle Zugriff hat, wie beispielsweise der UV-Lampe des Photo-Ionisations-Detektors (3), zusätzlich über eine Ladeeinheit für Akkumulatoren verfügt.

10. Einrichtung nach Anspruch 6,
**dadurch gekennzeichnet, dass** zur Untersuchung von Oberflächen eine Wärmequelle (13), vorzugsweise in Form einer Infrarot-Lampe, an dem Messsystem (1) positioniert ist, mit welcher die Schadstoffe an Oberflächen verflüchtigt werden können.

## Claims

1. Method for the determination of gaseous harmful substances, in which a sample gas flow is sucked up in a test system (1) by means of a combination of an ion mobility spectrometer (2) and additional detectors that detect those harmful substances which are not detected by the ion mobility spectrometer (2),
**characterized in that** the sample gas flow is mixed with a reference gas before reaching the detectors, alternatively only before reaching the ion mobility spectrometer (2), thereby constantly keeping the concentration of the harmful substances directed to the detectors below a predefined concentration, the metered addition of said reference gas being carried out by means of a feed pump (7), that a reactive gas is fed to the ion mobility spectrometer (2) via a metering unit for reactive gases (10) if any complex ion-mobility-spectrometer spectra are present during the test, said reactive gas being fed in order to increase the selectivity of the ion mobility spectrometer (2), and that the original concentration of the harmful substances in a test gas is calculated from the obtained test signals, i.e., on the basis of the ratio between the gas flow in a test gas path (8) prior to metering and the gas flow of the reference gas, whereupon, by means of predefined and stored test values by way of a simple comparison of the signal levels or a pattern recognition where all detector signals are compared with prestored signals at the same time, an alarm can be triggered and the test system (1) is swept by feeding the reference gas, and cleaned by feeding an additional cleansing gas if any contaminations exist, following the test phase.

2. Method according to claim 1,
**characterized in that** the mixing of the gaseous harmful substances with the reference gas before reaching the detectors, alternatively only before reaching the ion mobility spectrometer (2), is carried out in such a manner that the reference gas is fed in defined amounts, wherein the amount of flow is as high as possible at the beginning and reduced later, the gas flow is split afterwards and directed to the ion mobility spectrometer (2) and to the other detectors in a parallel manner.

3. Method according to claim 1,
characterized tin that the test signal of one or more of the detectors is used for regulating the metering of the reference gas by, e.g., directly using the relative signal level of a fast sensor, e.g., of a metal oxide sensor (5), for quickly increasing the gas flow of the feed pump (7) if the test signal of the detector increases or decreasing said gas flow if the test signal of the detector decreases, wherein additionally the test signal of a more inert sensor, e.g., of the ion mobility spectrometer (2), can be used for adjusting the absolute ranges of the amount of gas flow of the reference gas by using the absolute signal levels for a longer period of time in order to enable a coarse adjustment, i.e., an adjustment of the maximum range and minimum range of the flow rate of the reference gas of the gas flow.

4. Method according to claim 1,
**characterized in that** the gaseous harmful substances are directed through a combination of the ion mobility spectrometer (2) and a photoionization detector (3) for the detection of aromatics and through an additional galvanic cell (4) for the detection of individual substances, such as phosgene, and through additional metal oxide sensors (5, 6) for the detection of, e.g., hydrocarbons and carbon monoxide, wherein the sample gas flow is split and directed to the ion mobility spectrometer (2) and to the other detectors in a parallel manner.

5. Method according to claim 1,
**characterized in that** immediately after a detection of gaseous harmful substances from industrial sources, testing for a more selective detection of harmful substances that exhibit high proton or electron affinities, such as chemical warfare agents or explosives, is started by defined metered addition of one or various reactive gas/es to the ion mobility spectrometer (2) via the metering unit for reactive gases (10) following normal testing, and that said reactive gases exhibit slightly lower proton or electron affinities than the harmful substances to be detected and thereby enable detection to be more specific since many disturbing compounds are not ionized **in that** case and a combination of the test signals of the ion mobility spectrometer (2) without and with a reactive gas is used for assessment afterwards.

6. Device for the determination of gaseous harmful substances, consisting of a mobile test system (1) with an ion mobility spectrometer (2) and additional detectors, wherein the additional detectors are, e.g., a photoionization detector (3), a galvanic cell (4) and two metal oxide sensors (5, 6) that are connected to a first feed pump (9) via gas conduits, **characterized in that** an arrangement for the controlled metering of a reference gas by means of a second feed pump (7) is provided upstream the detectors and, additionally, a metering unit for reactive gases (10) is provided upstream the ion mobility spectrometer (2), and that there are an electronic unit with electronic computers (11), a readout unit (12) and optional visual and acoustic danger signaling units and a processing station (14) that has a third feed pump (15) for sweeping and cleaning the test system (1).

7. Device according to claim 6,
**characterized in that** a test gas is divided into three test gas paths, wherein one of them leads to the ion mobility spectrometer (2), another one to a galvanic cell (4), and the last one to an arrangement of two metal oxide sensors (5, 6) and to a downstream photoionization detector (3).

8. Device according to claim 7,
**characterized in that** the metering unit (10) is positioned at the ion mobility spectrometer (2) and can carry out, if necessary, a metered addition of one or more reactive gas/es by means of a valve, said reactive gases being stored in gas cylinders, diffusion tubes or permeation receptacles.

9. Device according to claim 6,
**characterized in that** the test system (1) further has a charging unit for accumulators, said charging unit being the processing station (14) that has the third feed pump (15) for sweeping and cleaning the test system (1) and has a source for producing a cleansing gas or has access to a source, such as the UV lamp of the photoionization detector (3).

10. Device according to claim 6,
**characterized in that** a heat source (13), preferably in the form of an infrared lamp, for the inspection of surfaces is positioned at the test system (1), by means of which heat source (13) the harmful substances on surfaces can be volatilized.

## Revendications

1. Procédé de détermination de polluants gazeux, dans lequel un flux de gaz d'échantillonnage est aspiré dans un système de mesure (1), et avec une combinaison d'un spectromètre de mobilité ionique (2) et d'autres détecteurs qui mettent évidence des polluants qui ne sont pas mis en évidence avec le spectromètre de mobilité ionique (2),
**caractérisé en ce que**, avant d'atteindre les détecteurs, ou bien également uniquement avant d'atteindre le spectromètre de mobilité ionique (2), le flux de gaz d'échantillonnage est mélangé avec un gaz de référence qui est ajouté par le biais d'une pompe d'alimentation (7) et **en ce que**, de la sorte, la concentration des polluants qui est conduite aux détecteurs est toujours maintenue au-dessous d'une concentration prédéfinie, en présence de spectres complexes de spectromètre de mobilité ionique pendant la mesure, un gaz de réaction est conduit au spectromètre de mobilité ionique (2) par le biais d'une unité de dosage de gaz de réaction (10) afin d'augmenter ainsi la sélectivité du spectromètre de mobilité ionique (2), et **en ce que**, à partir des signaux de mesure reçus, par le biais du rapport du flux de gaz dans un chemin de gaz de mesure (8) avant le dosage, et du flux de gaz du gaz de référence, la concentration initiale des polluants dans un gaz de mesure est calculée rétroactivement, et puis, avec des valeurs de mesure définies antérieurement et enregistrées, une alarme peut être déclenchée par le biais d'une comparaison simple des niveaux de signaux ou d'une détection d'échantillon où tous les signaux de détecteur sont comparés en une seule fois à des signaux enregistrés préalablement, et le système de mesure (1) après la phase de mesure est balayé par l'amenée du gaz de référence et, en cas de présence de contaminations, est nettoyé par l'amenée d'un gaz de nettoyage supplémentaire.

2. Procédé selon la revendication 1,
**caractérisé en ce que** le mélangeage des polluants gazeux avec le gaz de référence, avant d'atteindre les détecteurs, ou bien également uniquement avant d'atteindre le spectromètre de mobilité ionique (2), est effectué en fournissant le gaz de référence en quantités définies, en commençant avec la quantité de flux la plus élevée possible puis en la réduisant, le flux de gaz étant ensuite scindé et conduit au spectromètre de mobilité ionique (2) et, parallèlement, aux autres détecteurs.

3. Procédé selon la revendication 1,
**caractérisé en ce que** le signal de mesure d'un ou de plusieurs des détecteurs est utilisé pour la régulation du dosage du gaz de référence en utilisant par exemple directement le niveau de signal relatif d'un capteur rapide, par exemple un capteur métal-oxyde (5), afin d'augmenter brièvement le flux de gaz de la pompe d'alimentation (7) au cas où le signal de mesure du détecteur augmenterait, ou pour le réduire au cas où le signal de mesure du détecteur diminuerait ; en outre, le signal de mesure d'un capteur plus lent, par exemple celui du spectromètre de mobilité ionique (2), peut en plus être utilisé pour régler les plages absolues de la quantité de flux de gaz du gaz de référence en utilisant les niveaux de signaux absolus pendant une période de temps plus longue afin de permettre le réglage grossier, c'est-à-dire un réglage de la plage maximale et minimale de la quantité d'alimentation du gaz de référence du flux de gaz.

4. Procédé selon la revendication 1,
**caractérisé en ce que** les polluants gazeux sont conduits par le biais d'une combinaison composée du spectromètre de mobilité ionique (2) et d'un détecteur à photo-ionisation (3) pour la mise en évidence d'aromates et, par le biais d'une cellule électrochimique (4) supplémentaire pour la mise en évidence de substances individuelles, comme par exemple du phosgène, et par le biais de capteurs métal-oxyde (5, 6) supplémentaires pour la mise en évidence par exemple d'hydrocarbures et de monoxyde de carbone, le flux de gaz d'échantillonnage étant scindé et conduit au spectromètre de mobilité ionique (2) et, parallèlement, aux autres détecteurs.

5. Procédé selon la revendication 1,
**caractérisé en ce que**, directement après une détection de polluants gazeux de sources industrielles, il est activé un mode de mesure pour la détection plus sélective de polluants ayant une forte affinité protonique ou électronique, comme par exemple des agents de combat chimiques ou des explosifs, en ajoutant au spectromètre de mobilité ionique (2), de façon définie, après un mode de mesure normal, un ou différents gaz de réaction par le biais de l'unité de dosage de gaz de réaction (10), et ces gaz de réaction se distinguent **en ce qu'**ils présentent des affinités protoniques ou électroniques un peu plus faibles que les polluants à détecter, et permettent ainsi la mise en évidence avec une spécificité plus élevée étant donné que de nombreuses liaisons perturbatrices ne sont alors pas ionisées et qu'ensuite il est fait appel pour l'analyse à une combinaison des signaux de mesure du spectromètre de mobilité ionique (2) sans le gaz de réaction ou en même temps que celui-ci.

6. Equipement de détermination de polluants gazeux, constitué d'un système de mesure (1) mobile avec un spectromètre de mobilité ionique (2) et d'autres détecteurs, les autres détecteurs étant par exemple un détecteur à photo-ionisation (3), une cellule électrochimique (4) et deux capteurs métal-oxyde (5, 6) qui sont raccordés à une première pompe d'alimentation (9) par le biais de conduites de gaz, **caractérisé en ce que**, en amont des détecteurs, il est aménagé un agencement de dosage contrôlé d'un gaz de référence au moyen d'une deuxième pompe d'alimentation (7) et, en amont du spectromètre de mobilité ionique (2), il est en plus aménagé une unité de dosage de gaz de réaction (10), et il y a une électronique avec des calculateurs électroniques (11), une unité d'affichage (12) et des émetteurs de signaux d'alarme optiques et acoustiques optionnels, et une station de traitement (14) qui dispose d'une troisième pompe d'alimentation (15) pour le balayage et le nettoyage du système de mesure (1).

7. Equipement selon la revendication 6,
**caractérisé en ce qu'**un gaz de mesure est divisé en trois chemins de gaz de mesure, l'un conduisant au spectromètre de mobilité ionique (2), un autre à une cellule électrochimique (4), et le dernier à un agencement composé de deux capteurs métal-oxyde (5, 6) et d'un détecteur à photo-ionisation (3) placé en aval.

8. Equipement selon la revendication 7,
**caractérisé en ce que** l'unité de dosage (10) est positionnée sur le spectromètre de mobilité ionique (2) et peut en cas de besoin, par le biais d'une vanne, ajouter un ou plusieurs gaz de réaction qui sont entreposés dans des bouteilles de gaz, des petits tubes de diffusion ou des réservoirs à perméation,

9. Equipement selon la revendication 6,
**caractérisé en ce que** le système de mesure (1), avec la station de traitement (14) qui dispose de la troisième pompe d'alimentation (15) pour le balayage et le nettoyage du système de mesure (1) et d'une source de production d'un gaz de nettoyage, ou qui a accès à une source comme par exemple la lampe UV du détecteur à photo-ionisation (3), dispose en plus d'une unité de charge pour des accumulateurs.

10. Equipement selon la revendication 6,
**caractérisé en ce que**, pour l'examen de surfaces, une source de chaleur (13), de préférence sous forme de lampe infrarouge, est positionnée sur le système de mesure (1) et permet de volatiliser les polluants sur les surfaces.
